(19) Europäisches Patentamt
European Patent Office
Office européen des brevets

(11) EP 4 718 310 A1

(12) EUROPÄISCHE PATENTANMELDUNG

(43) Veröffentlichungstag:
01.04.2026 Patentblatt 2026/14

(21) Anmeldenummer: 25205192.5

(22) Anmeldetag: 29.09.2025

(51) Internationale Patentklassifikation (IPC):
G06F 30/13 (2020.01)          G06F 30/27 (2020.01)
G06Q 50/08 (2012.01)

(52) Gemeinsame Patentklassifikation (CPC):
G06F 30/13; G06F 30/27; G06Q 50/08;
G06F 2119/06

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 30.09.2024 DE 102024128221

(71) Anmelder: MEF MyEnergy.Farm GmbH
01454 Radeberg (DE)

(72) Erfinder:
• Griebel, Dr. Dragan
95173 Schönwlad (DE)
• Renner, Dipl.-Ing. Ole
01099 Dresden (DE)

(74) Vertreter: Sperling, Thomas
Sperling, Fischer & Heyner
Patentanwälte
Tolkewitzer Straße 22
01277 Dresden (DE)

(54) **VERFAHREN ZUR ERMITTLUNG GEBÄUDESPEZIFISCHER ENERGIEKONZEPTE FÜR BEHEIZTE GEBÄUDE**

(57) Die Erfindung betrifft ein Verfahren zur Ermittlung gebäudespezifischer Energiekonzepte für beheizte Gebäude, wobei eine Ermittlung standortindividueller, holistischer Energiekonzepte für beheizte Gebäude erfolgt, bei welchem:
- in einem ersten Schritt einem Prozessormodul (2) über eine Eingabeeinheit (4) Datensätze bereitgesteilt und vorverarbeitet werden, wobei die Datensätze mindestens gebäudespezifische Daten sind und mindestens physikalische Parameter des Gebäudes ermittelt werden,
- Verarbeitungsresultate aus dem ersten Schritt und weitere Parameter einem KI-Modul (3) im Prozessormodul (2), zur Verarbeitung durch das KI- Modul (3), bereitgestellt werden, wobei eine KI-unterstützte Ermittlung ganzheitlicher optimierter Lösungen nach physikalischer Logik im KI-Modul (3) mit einer Energiebilanzierung des Gebäudes inklusive der Prozessenergie erfolgt und mindestens ein Energiekonzepte durch das KI-Modul (3) bereitgestellt wird,
- Ergebnisse der KI-unterstützte Ermittlung über eine Ausgabeeinheit (17) ausgegeben werden, wobei die Ausgabe eines Energiekonzepts nach physikalischer Logik und/oder nach nationaler Gesetzgebung erfolgt,
- die KI-unterstützte Ermittlung ganzheitlicher optimierter Lösungen im KI-Modul (3) auf Zustandsbeschreibungen mittels Einheitsvektoren und Observablen aus selbstadjungierten Operatoren als isomorph-äquivalent vereint im Hilbertraum erfolgt.
Die Erfindung betrifft weiterhin eine Vorrichtung (1), ein Computergerät, ein computerlesbares Speichermedium sowie ein Computerprogrammprodukt zur Durchführung des Verfahrens.

Fig. 2

**Beschreibung**

Die Erfindung betrifft ein Verfahren zur Ermittlung gebäudespezifischer Energiekonzepte für beheizte Gebäude mit den Merkmalen des Oberbegriffs des Anspruchs 1.

Die Erfindung betrifft insbesondere ein auf Künstliche Intelligenz KI gestütztes Verfahren zur automatisierten Generierung standortindividueller, holistischer Energiekonzepte für beheizte Gebäude sowie eine Vorrichtung, ein Computergerät, ein computerlesbares Speichermedium sowie ein Computerprogrammprodukt zur KI-gestützten Ermittlung standortindividueller, holistischer Energiekonzepte für beheizte Gebäude.

Der Betrieb von Gebäuden verursacht in Deutschland etwa 30 Prozent der Treibhausgase. Laut aktueller deutscher Gesetzgebung, dem Gebäudeenergiegesetz GEG als nationale Umsetzung der EU Gebäuderichtlinie, muss der Gebäudesektor bis 2045 klimaneutral sein. Auch die Klimaziele der Europäischen Union sehen laut EU-Gebäuderichtlinie vor, dass der Gebäudesektor bis 2050 klimaneutral sein muss.

Für den bevorstehenden Transformationsprozess benötigen Gebäudebesitzer die Unterstützung von Energieberatern. Diese müssen sowohl die gesetzlichen Vorgaben beherrschen als auch die notwendigen sektorenübergreifenden Fachkenntnisse in den Bereichen Bauphysik, Anlagentechnik, erneuerbare Energien und Energiespeicher mitbringen. Durch stetige technische Neuentwicklungen und wachsende normative und gesetzliche Anforderungen steigt die Komplexität der zu berücksichtigen Rahmenparameter stetig.

Das erfindungsgemäße Verfahren eröffnet die Möglichkeit den Prozess der Energieberatung für beheizte Gebäude wesentlich zu verbessern und standortindividuelle Energiekonzepte zukünftig deutlich effektiver und mit höherer Qualität zu erarbeiten, wodurch der Energieverbrauch gesenkt und die Kosten des Betriebes von Gebäuden reduziert werden kann.

Im Stand der Technik sind verschiedene Verfahren bekannt, bei denen mit Hilfe von Software für Energienachweise nach der DIN V18599 entsprechende Berechnungen angestellt werden. Dabei ist anzuerkennen, dass eine holistische Standortbetrachtung erfolgt und Wirtschaftlichkeitsbetrachtungen im Prozess ansatzweise integriert sind. Nachteilig ist, dass es sich nur um ein Kennwerteverfahren handelt und reale physikalische Vorgänge durch dieses Berechnungsverfahren nur bedingt abgebildet werden.

Die berechneten Ergebnisse weichen somit von den Realverbräuchen häufig um den Faktor 2 bis 3 ab und es werden keine Lösungsvorschläge ausgegeben. Lediglich vom Energieberater eingegebene Varianten werden bei diesem Verfahren nachgewiesen.

Weiterhin sind Simulationsverfahren und entsprechende Softwareprodukte bekannt, die aufwendige Simulationen vornehmen können, insbesondere im Anlagentechnikbereich. Dabei ist anzuerkennen, dass eine physikalisch basierte Berechnung des Energieverbrauches erfolgt. Nachteilig ist jedoch, dass es keine holistische Standortbetrachtung gibt, da entweder die Anlagentechnik oder die Bauphysik die wesentlichen Parameter der Simulationssoftware bestimmen. Auch ist als nachteilig ein sehr hoher Modellierungsaufwand pro Variante zu nennen und die Ergebnisse sind nur bedingt für einen Variantenvergleich geeignet. Außerdem ist nachteilig, dass eine tiefgreifende Fachkenntnis des Bedieners der Software erforderlich ist und zumeist nur eingeschränkte Lösungsvorschläge bei bestimmten Simulationen erhältlich sind.

Open Source Simulationssoftware liefert teilweise detailstarke teil- und vollständig gekoppelte Analysen von Wärmenetzen, Energiesystemen und Gebäuden.

Nachteilig ist, dass ein umfangreiches Expertenwissen erforderlich ist, um die Software zu bedienen. Zur Erstellung von Simulationsmodellen ist ein hoher Aufwand und viel Detailwissen erforderlich und es besteht ein hoher Rechenaufwand und damit verbundene längere Rechenzeiten.

Im Gegensatz zu vorgenannten Simulationssoftwareanwendungen sind auch öffentlich zugängliche Konfiguratoren bekannt, die vergleichsweise einfach zu bedienen sind und schnelle Ergebnisse liefern. Nachteilig ist jedoch, dass diese Konfiguratoren keine realistische Betrachtung ermöglichen und in der Regel nur eine unzureichende Tiefe bei der Gebäudeerfassung realisiert wird. Auch werden keine Lösungsvorschläge angeboten.

Wie aus vorangehend beschriebener Übersicht hervorgeht, sind derzeit nur ausgewählte aufwändig arbeitende Simulationssysteme in der Lage, aktiv Lösungsvorschläge zu generieren. Diese beschränken sich jedoch lediglich auf einzelne Aspekte der Anlagentechnik. Eine annähernd holistische Standortbetrachtung bietet derzeit nur Energieberatersoftware, deren Berechnungskernel allerdings nur auf dem Berechnungsverfahren nach DIN V 18599 basieren.

Da die softwareseitige Unterstützung momentan nicht optimal ist, ist die Erstellung von standortindividuellen Energiekonzepten und Sanierungsfahrplänen durch Energieberater derzeit sehr zeitintensiv. Eine erfolgreiche Transformation der Gebäude, allein in Deutschland betrifft dies 19 Millionen Wohngebäude und 2 Millionen Nichtwohngebäude, kann bei solchen Bearbeitungszeiten mit der gegebenen Kapazität an Energieberatern kaum gelingen. Neben der Bearbeitungszeit ist auch die Qualität der üblichen Energieberatung zu hinterfragen. Durch die vielen komplexen Zusammenhänge ist es für Berater kaum möglich, zu allen sinnvollen Lösungsoptionen und Kombinationen kompetent zu beraten.

Im Stand der Technik ist darüber hinaus aus der EP4085387 A1 ein Verfahren und eine Vorrichtung zur Vorhersage des Energieverbrauchs, eine Vorrichtung und ein lesbares Speichermedium bekannt.

Vorgesehen sind ein Verfahren und eine Vorrichtung zur Vorhersage des Stromverbrauchs, ein Gerät und ein lesbares Speichermedium. Das Verfahren umfasst das Erfassen einer Referenzvariablen, die in einem historischen Zeitraum erzeugt wurde; das Erfassen des vorhergesagten Stromverbrauchs in einem Zielzeitraum durch Eingabe einer variablen Eigenschaft in ein Stromverbrauchsvorhersagemodell, wobei der Zielzeitraum und der historische Zeitraum in einer entsprechenden Beziehung zueinander stehen und das Stromverbrauchsvorhersagemodell durch Training einer Referenzvariablenprobe erhalten wird, die mit einem Muster-Stromverbrauch gekennzeichnet ist. Bei dem Verfahren wird die Referenzvariable, die eine diskrete Referenzvariable und eine kontinuierliche Referenzvariable in dem Verlaufszeitraum umfasst, erfasst. Dabei wird eine Eigenschaft der erfassten Referenzvariable berücksichtigt und eine extrahierte variable Eigenschaft wird in ein variables Vorhersagemodell eingegeben, um den vorhergesagten Stromverbrauch in dem Zielzeitraum auszugeben.

Aus der WO2021133253 A1 ist ein Verfahren zur Vorhersage des Energieverbrauchs bekannt, wobei das Verfahren auf einem Computer anwendbar ist und umfasst: Erfassen erster Verlaufsdaten, wobei die ersten Verlaufsdaten Verlaufs-Energieverbrauchsdaten eines ersten Objekts umfassen; Erfassen einer realen Energieverbrauchsprobe des ersten Objekts auf der Grundlage der ersten Verlaufsdaten; Erfassen einer simulierten Energieverbrauchsprobe des ersten Objekts auf der Grundlage der realen Energieverbrauchsprobe, wobei die simulierte Energieverbrauchsprobe eine Energieverbrauchsprobe umfasst, die durch Erweiterung auf der Grundlage der realen Energieverbrauchsprobe erfasst wird; und Berechnen des vorhergesagten Energieverbrauchs des ersten Objekts auf der Grundlage der realen Energieverbrauchsprobe und der simulierten Energieverbrauchsprobe durch Aufrufen eines Energieverbrauchsprognosemodells.

Die CN114943565 A offenbart ein Verfahren zur Vorhersage des Spotpreises für elektrische Energie, das auf einem intelligenten Algorithmus basiert und ist dadurch gekennzeichnet, dass es die folgenden Schritte umfasst:

Erfassen von historischen Ressourcenaustauschdaten und Einflussfaktordaten, wobei die historischen Ressourcenaustauschdaten zur Angabe des Clearingpreises der Zielenergie in einem historischen Zeitraum verwendet werden und die Einflussfaktordaten zur Angabe von Faktoren verwendet werden, die den Clearingpreis der Zielenergie in einem Vorhersagezeitraum beeinflussen; Analysieren der historischen Ressourcenaustauschdaten und der Einflussfaktordaten, um ein Dateneinflussanalyseergebnis zu erhalten, wobei das Dateneinflussanalyseergebnis verwendet wird, um das Einflussanalyseergebnis der Einflussfaktordaten auf den Abrechnungspreis im Vorhersagezeitraum anzuzeigen;

Analysieren der historischen Ressourcenaustauschdaten durch Kombinieren des Dateneinflussanalyseergebnisses, um einen vorhergesagten Abrechnungspreis der Zielenergie im Vorhersagezeitraum zu erhalten;

Bestimmung einer Transaktionsstrategie der Zielenergiequelle im Vorhersagezeitraum auf der Grundlage einer Zielertragsfunktion und des vorhergesagten Clearingpreises, wobei die Transaktionsstrategie einen Transaktionsbetrag und einen Ressourcenaustauschbetrag umfasst und die Zielertragsfunktion zur Angabe eines Ertragsziels im Vorhersagezeitraum verwendet wird.

Zur Erstellung standortindividueller Energiekonzepte gibt es derzeit kaum aktive Unterstützung für Energieberater, sondern lediglich fragmentierte Einzellösungen als Arbeitswerkzeuge. Von besonderem Nachteil ist die mangelnde Unterstützung bei der Lösungsfindung. Denn bereits bei einem einzelnen Wohngebäude existieren mehr als 10 Kategorien von Lösungsbausteinen, die standortindividuell zu konfigurieren sind, darunter: Sanierungsvarianten, Photovoltaik-Leistung, Photovoltaik-Nutzung, Batteriekapazität, Batterietyp, Wärmeerzeuger, Wärmeübergabe, Warmwassererzeugung, Wärmespeicher, Lüftungskonzept, Förderkonzept und vieles mehr. Gepaart mit der zunehmenden Komplexität gesetzlicher Rahmenbedingungen ist es für den Beratenden daher kaum noch möglich, den gesamten Lösungsraum zu überblicken beziehungsweise eine optimale Maßnahmenkombination zu finden. Die Qualität eines Energiekonzepts hängt derzeit maßgeblich vom individuellen Wissens- und Erfahrungshorizont des Energieberaters ab.

Die Aufgabe der Erfindung besteht somit darin, dem Energieberater ein technisches Hilfsmittel an die Hand zu gegeben, um optimale Lösungen im Hinblick auf Energiebedarf und Kosten zu erarbeiten.

Im Unterschied zu den Lösungen nach dem Stand der Technik sollen Energieberater Unterstützung in Form standortindividueller, holistischer Lösungsvorschläge erhalten, wobei die Bearbeitungszeit pro Beratungsprozess deutlich verkürzt und die Qualität der Beratung erhöht und verstetigt wird.

Die Aufgabe wird durch ein Verfahren und Gegenstände mit den Merkmalen gemäß der selbstständigen Patentansprüche gelöst. Weiterbildungen sind in den abhängigen Patentansprüchen angegeben.

Die Aufgabe der Erfindung wird insbesondere durch ein Verfahren zur Ermittlung gebäudespezifischer Energiekonzepte für beheizte Gebäude gelöst, wobei eine Ermittlung standortindividueller, holistischer Energiekonzepte für beheizte Gebäude erfolgt, bei welchem:

- in einem ersten Schritt einem Prozessormodul über eine Eingabeeinheit Datensätze bereitgestellt und

vorverarbeitet werden, wobei die Datensätze mindestens gebäudespezifische Daten sind und mindestens physikalische Parameter des Gebäudes ermittelt werden,

- Verarbeitungsresultate aus dem ersten Schritt und weitere Parameter einem KI-Modul im Prozessormodul, zur Verarbeitung durch das KI-Modul, bereitgestellt werden, wobei eine KI-unterstützte Ermittlung ganzheitlicher optimierter Lösungen nach physikalischer Logik im KI-Modul mit einer Energiebilanzierung des Gebäudes inklusive der Prozessenergie erfolgt und mindestens ein Energiekonzepte durch das KI-Modul bereitgestellt wird,
- Ergebnisse der KI-unterstützte Ermittlung über eine Ausgabeeinheit ausgegeben werden, wobei die Ausgabe eines Energiekonzepts nach physikalischer Logik und/oder nach nationaler Gesetzgebung erfolgt,
- die KI-unterstützte Ermittlung ganzheitlicher optimierter Lösungen im KI-Modul auf Zustandsbeschreibungen mittels Einheitsvektoren und Observablen aus selbstadjungierten Operatoren als isomorph-äquivalent vereint im Hilbertraum erfolgt.

Erfindungsgemäß ist einem Prozessormodul eine Eingabeeinheit zugeordnet. Mittels dieser Eingabeeinheit werden eingangsseitige Daten beziehungsweise Datensätze bereitgestellt, welche nachfolgen im Prozessormodul erfindungsgemäß verarbeitet werden. Außerdem kann mittels der Eingabeeinheit bereits eine Vorverarbeitung von eingangsseitigen Daten beziehungsweise Datensätzen erfolgen, bevor die derart vorverarbeiteten Daten dem Prozessormodul zur Verarbeitung bereitgestellt werden. Derartige eingangsseitige Daten beziehungsweise Datensätze sind mindestens gebäudespezifische Daten wie beispielsweise Daten vom Istzustand des Gebäudes, vom Istzustand der Anlagentechnik sowie Verbräuche und Lastgänge. Weiterhin sind derartige eingangsseitige Daten beziehungsweise Datensätze physikalische Parameter des Gebäudes, hier teilweise auch als Baukörper bezeichnet, wie beispielsweise eine Wärmekapazität des Baukörpers und Transmissionswärmeverluste mit Ist-Stand und Varianten.

Ein erfindungsgemäßes Prozessormodul ist mit einem KI-Modul ausgestattet, welches zur KI-unterstützten Ermittlung ganzheitlicher optimierter Lösungen nach physikalischer Logik ausgelegt ist. Eine derartige ganzheitliche optimierte Lösung wird auch hier auch als standortindividuelles, holistisches Energiekonzepte für beheizte Gebäude oder kürzer nur als Energiekonzept bezeichnet.

Nach physikalischer Logik meint, dass bei der KI-unterstützten Ermittlung des Energiekonzepts physikalische Gesetzmäßigkeiten zur Anwendung kommen beziehungsweise beachtet werden. Die betrifft insbesondere physikalische Gesetzmäßigkeiten und Parameter im Bereich der Wärmelehre, welche beispielweise bei der Ermittlung von Wärmeverlusten beziehungsweise Transmissionswärmeverlusten des Gebäudes sowie bei der Ermittlung eines Wärmebedarfs für das Gebäude Anwendung finden. Beispielsweise werden diesbezüglich Wohnflächen des Gebäudes, Rauminhalte der Zimmer des Gebäudes, Wärmeübergangskoeffizienten der Wände und Fenster sowie des Dachbereichs des Gebäudes sowie Wärmeverluste durch Klima- oder Belüftungsanlagen berücksichtigt. Weiterhin werden bei der KI-unterstützten Ermittlung des Energiekonzepts auch physikalische Gesetzmäßigkeiten und Parameter in den Bereichen Photovoltaik-Leistung, Photovoltaik-Nutzung, Batteriekapazität, Batterietyp, Wärmeerzeuger, Wärmeübergabe, Warmwassererzeugung, Wärmespeicher und Lüftungskonzept berücksichtigt.

Bei dieser Ermittlung eines Energiekonzepts wird eine Energiebilanzierung des Gebäudes vorgenommen, wobei dieser Vorgang inklusive der Prozessenergie erfolgt. Bei dieser KI-unterstützten Ermittlung wird mindestens ein Energiekonzepte durch das Prozessormodul, insbesondere das KI-Modul bereitgestellt.

Zur Ausgab der Ergebnisse der KI-unterstützten Ermittlung ganzheitlicher optimierter Lösungen ist ein Ausgabeeinheit mit dem Prozessormodul verbunden angeordnet. Dieses Prozessormodul ist ausgelegt, eine Ausgabe eines Energiekonzepts nach physikalischer Logik vorzunehmen. Dieses Prozessormodul ist weiterhin ausgelegt, eine Ausgabe eines Energiekonzepts nach nationaler Gesetzgebung vorzunehmen, beispielsweise nach aktueller deutscher Gesetzgebung, dem Gebäudeenergiegesetz GEG oder einer Landesbauordnung.

Unter Einheitsvektoren werden normierte Vektoren mit der Norm Eins verstanden und unter Observablen sind Messgrößen mit zugeordnetem Operator zu verstehen. Selbstadjungierte Operatoren nach Schrödinger und Heisenberg sind lineare Operatoren mit besonderen Eigenschaften.

Im Sinne der Funktionsanalysis bedeutet isomorph/äquivalent vereint, dass Teile einer Struktur auf bedeutungsgleiche Teile einer anderen Struktur abgebildet werden.

Die dargelegte Vorgehensweise erlaubt eine möglichst simple Darstellung beliebig komplexer Probleme durch die optimale Wahl eines individuellen Hilbertraums.

Mit der KI-gestützten Ermittlung standortindividueller, holistischer Energiekonzepte für beheizte Gebäude wird ein quasi digitaler Zwilling als möglichst allumfassendes Abbild einzelner Gebäude über zahlreiche Parameter erstellt. Diese Herangehensweise für die Lösung des Problems der Ermittlung von Energiekonzepten ermöglicht eine große Anzahl von möglichen Optionen zur energetischen Optimierung unter Beachtung heterogener externer Einflussfaktoren. Genutzt wird dabei eine Vorgehensweise ähnlich der Darstellung von Zuständen und Observablen in der Quantenmechanik über Hilberträume.

Im Ergebnis erfolgt das Auffinden der individuell optimalen Energiemaßnahme durch Lösen des multidimensionalen Problems mittels maschinellem Lernen als Teilgebiet der künstlichen Intelligenz.

Die vorliegende Erfindung unterscheidet sich vom bekannten Stand der Technik der EP 4 102 444 A1 insbesondere dadurch, dass in der Erfindung kein linearer Algorithmus mit einer linearen Funktion, sondern eine n-dimensionale Berechnungslogik zur Lösung des multidimensionalen Matrix-Problems aufgebaut wird. Somit unterscheidet sich die mathematische Basis beziehungsweise der Ansatz fundamental von der EP 4 102 444 A1. Ein weiterer Unterschied besteht darin, dass erfindungsgemäß ein Vektorraum mittels Einheitsvektoren aus eingangsseitig bereitgestellten Werten erstellt wird, aus welchem die Extrema - lokale Minima und lokale Maxima - direkt abgelesen werden. Eine "Näherung" bzw. "maschinelles Lernen" erfolgt erst erfindungsgemäß im Anschluss in der jeweiligen Vektordimension. Der Stand der Technik der EP 4 102 444 A1 verwendet im Gegensatz hierzu Gewichtungen. In der EP 4 102 444 A1 liegt der Schwerpunkt darin, herauszufinden, welche Fähigkeiten und Fachleute zur Realisierung eines bestimmten Vorhabens benötigt werden. Erfindungsgemäß sind die in der EP 4 102 444 A1 angegebenen beziehungsweise benötigten Phasen und Daten nicht notwendig, da das erfindungsgemäße Ziel die besten möglichen Optionen, also die Ermittlung mindestens eines gebäudespezifischen Energiekonzepts für das beheizte Gebäude ist.

Die vorliegende Erfindung unterscheidet sich vom bekannten Stand der Technik der US 2019/0311286 A1 insbesondere dadurch, dass es erfindungsgemäß nicht um ein Mikronetz oder ein verteiltes Energieressourcensystem geht. Wärend die US 2019/0311286 A1 einen Überblick über aktuelle Möglichkeiten im Energieversorgungsmarkt aufzeigt, liegt der Focus der Erfindung auf einer Gebäudesimulation, unter Verwendung von Gebäudeparametern zur Berechnung der Dämmung, in Kombination mit Angaben zu Parametern wie Photovoltaik-Leistung, Photovoltaik-Nutzung, Batteriekapazität, Batterietyp, Wärmeerzeuger, Wärmeübergabe, Warmwassererzeugung, Wärmespeicher, Lüftungskonzept, Förderkonzept und anderen mehr. Somit unterscheiden sich die Ziele und dadurch auch die Berechnungslogik voneinander.

Erfindungsgemäß werden auch weitere Parameter wie technische Lösungsbausteine, gesetzliche Rahmenbedingungen und Förderbausteine und/oder Kosten für Lösungsbausteine beispielsweise von intelligenten Datenbanken an das KI-Modul im Programmmodul übermittelt. Diese weiteren Parameter werden bei der KI-unterstützte Ermittlung ganzheitlicher optimierter Lösungen also der Bereitstellung mindestens eines Energiekonzepts berücksichtigt.

Vorgesehen ist es weiterhin, dass eine Lösung des multidimensionalen Matrix-Problems im Hilbertraum als optimale Lösung L aus dem Skalarprodukt aller relevanten Observablen A im Zustand $\Psi$ mit Messwert $\alpha$ gemäß L=|<$\alpha$⊢||$\psi$>⊣|^2 berechnet wird.

Die Lösung des multidimensionalen Matrix-Problems im Hilbertraum lässt sich als optimale Lösung L aus dem Skalarprodukt aller relevanten Observablen A im Zustand $\psi$ mit Messwert $\alpha$ berechnen zu:

$$L = |< \alpha | \psi >|^2$$

Hierbei wird die Observable A durch den Operator $\hat{A}$ beschrieben und $|\alpha >$ ist der Eigenzustand zum Eigenwert $\alpha$ des Operators $\hat{A}$. Die Lösung L ist zu verstehen als Optimierung hinsichtlich des Gebäude-Energieverbrauchs.

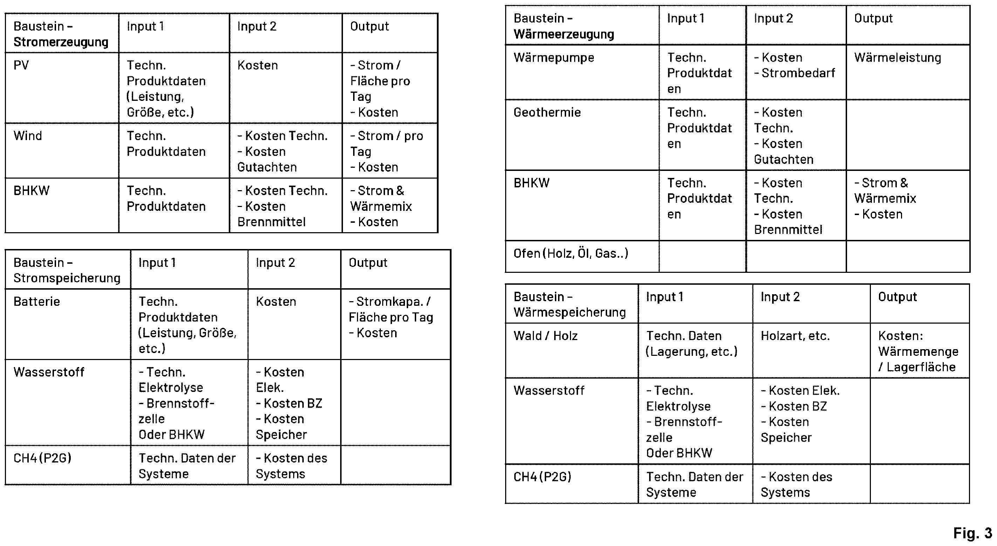

Ein skizzierter Matrixaufbau relevanter Observablen ist in der Figur 3 dargestellt und beschrieben.

Erfindungsgemäß vorgesehen ist weiterhin, dass in der Ausgabeeinheit ein Ausgabemodul zur Ausgabe des Energiekonzepts nach physikalischer Logik und ein Ausgabemodul zur Ausgabe des Energiekonzepts nach nationaler Gesetzgebung bereitgestellt werden.

Durch eine derartige Bereitstellung verschiedener Ausgabemodul in der Ausgabeeinheit, wird die Ausgabe des Energiekonzepts nach physikalischer Logik sowie die Ausgabe des Energiekonzepts nach nationaler Gesetzgebung unabhängig voneinander ermöglicht.

Vorteilhaft werden gebäudespezifische Daten aus Daten vom Istzustand der Anlagentechnik, Verbräuche und Lastgänge, Kundenwünsche, standortspezifische Randbedingungen ausgewählt und an das KI-Modul im Programmmodul übermittelt.

Bevorzugt werden gebäudespezifische Daten als gebäudespezifische Randbedingungen an das KI-Modul im Programmmodul übermittelt.

Eine vorteilhafte Ausgestaltung des Verfahrens besteht darin, dass als physikalische Parameter die Wärmekapazität des Gebäudes beziehungsweise Baukörpers, Transmissionswärmeverluste mit Ist-Stand und Varianten und/oder Photovoltaikerträge mit Ist-Stand und Varianten an das KI-Modul im Programmmodul übermittelt werden.

Das KI-Modul berechnet vorteilhaft 10.000 bis 50.000 simulierte Optionen pro Gebäude.

Die Aufgabe wird auch durch eine Vorrichtung zur Ermittlung gebäudespezifischer Energiekonzepte beheizte Gebäude mit den Merkmalen des Oberbegriffs des Anspruchs 9 gelöst. Eine derartige Vorrichtung ist insbesondere eingerichtet zur Durchführung des Verfahrens zur Ermittlung gebäudespezifischer Energiekonzepte für beheizte Gebäude.

Erfindungsgemäß vorgesehen ist, dass die Vorrichtung mindestens ein Prozessormodul, eine Eingabeeinheit und eine Ausgabeeinheit aufweist. Eine derartige Eingabeeinheit umfasst ein Inputmodul und ein Programmmodul. Das Prozessormodul ist zur Verarbeitung von eingangsseitigen Daten ausgelegt, welche vom Inputmodul und/oder vom Programmmodul an das Prozessormodul übergeben werden. Insbesondere erfolgt die Verarbeitung der Daten im Programmmodul durch ein im Prozessormodul angeordnetes KI-Modul. Weitere Daten werden durch eine mit dem Prozessormodul verbundene intelligente Datenbank an das Prozessormodul zur Verarbeitung übergegen. Das Prozessormodul mit seinem KI-Modul ist insbesondere ausgelegt zur Ermittlung gebäudespezifischer Energiekonzepte für beheizte Gebäude, wobei eine Ermittlung standortindividueller, holistischer Energiekonzepte für beheizte Gebäude erfolgt und wobei mindestens ein Energiekonzept erzeugt und ausgegeben wird.

Die Vorrichtung weist weiterhin eine mit dem Prozessormodul verbundene Ausgabeeinheit auf, welche zur Ausgabe des mindestens einem erzeugten Energiekonzept ausgelegt ist. Insbesondere weist die Ausgabeeinheit ein Ausgabemodul zur Ausgabe eines Energiekonzepts nach physikalischer Logik und ein Ausgabemodul zur Ausgabe eines Energiekonzepts nach nationaler Gesetzgebung auf.

Das Inputmodul dient zur Aufnahme von Vor-Ort-Daten und überträgt beispielsweise Informationen zum Istzustand der Anlagentechnik des Gebäudes, zu Verbräuchen und Lastgängen, Kundenwünschen sowie standortspezifische Randbedingungen an das Prozessormodul beziehungsweise das KI-Modul. Das Inputmodul überträgt weiterhin gebäudespezifische Randbedingungen an das Programmmodul, welches Daten zur Wärmekapazität des Gebäudes beziehungsweise Baukörpers, Daten zu Transmissionswärmeverlusten als Ist-Daten und als Variationen sowie Photovoltaik-Erträge als Ist-Daten und als Varianten an das Prozessormodul beziehungsweise das KI-Modul überträgt.

Das KI-Modul ist ausgelegt für eine Vorverarbeitung also ein Pre-Processing, bei welchem Randbedingungen durch einen Fachmann definiert werden, auch bezeichnet als "Definition Boundary Conditions".

Das KI-Modul ist weiterhin ausgelegt für die KI-unterstützte Ermittlung ganzheitlicher optimierter Lösungen nach physikalischer Logik, bei welcher eine Energiebilanzierung des Gebäudes inklusive der Prozessenergie erfolgt und mindestens ein Energiekonzepte durch das KI-Modul erzeugt beziehungsweise bereitgestellt wird.

Das KI-Modul ist zusätzlich ausgelegt für eine Nachbearbeitung, auch als "Post-Processing" bezeichnet, bei welcher eine Ergebnisaufbereitung des mindestens einem Energiekonzept erfolgt. Diese Nachbearbeitung erfolgt mit manueller Unterstützung durch den Fachmann, der auch bereits die Vorverarbeitung unterstützt hat.

Die mit Prozessormodul verbundene Intelligente Datenbank stellt Daten zu Parametern technischer Lösungsbausteine, gesetzlichen Rahmenbedingungen sowie Förderbausteinen und Kosten für Lösungsbausteine für das Prozessormodul mit dem KI-Modul bereit.

Die Aufgabe wird weiterhin durch ein Computergerät gelöst, dass einen Prozessor und einen Speicher umfasst, wobei mindestens ein Programm in dem Speicher gespeichert ist und wobei das mindestens eine Programm von dem Prozessor geladen und ausgeführt wird, um das Verfahren zur Ermittlung gebäudespezifischer Energiekonzepte für beheizte Gebäude zu implementieren.

Weiterhin wird die Aufgabe durch ein computerlesbares Speichermedium mit mindestens einem darin gespeicherten Programmcode gelöst, wobei der mindestens eine Programmcode von einem Prozessor geladen und ausgeführt wird, um das Verfahren zur Ermittlung gebäudespezifischer Energiekonzepte für beheizte Gebäude auszuführen.

Schließlich wird die Aufgabe der Erfindung durch ein Computerprogrammprodukt gelöst, dass ein Computerprogramm umfasst, dass, wenn es von einem Prozessor ausgeführt wird, ein Verfahren zur Ermittlung gebäudespezifischer Energiekonzepte für beheizte Gebäude gemäß dem vorgenannten Verfahren implementiert.

Die Konzeption der Erfindung besteht darin, dass ein KI-gestütztes Verfahren zur automatisierten Generierung standortindividueller, holistischer Energiekonzepte für beheizte Gebäude zur Verfügung gestellt wird. Das Verfahren greift auf einen Algorithmus mit angeschlossener, intelligenter Datenbank zurück.

Das erfindungsgemäße Verfahren eröffnet die Möglichkeit den Prozess der Energieberatung wesentlich zu verbessern und standortindividuelle Energiekonzepte effektiver und mit höherer Qualität zu erarbeiten. Der KIgestützte Algorithmus greift auf eine umfassende Datenbank mit Lösungsbausteinen zurück und liefert im Beratungsprozess holistische technische Handlungsvorschläge für einzelne Gebäude oder Gebäudegruppen unter Einbeziehung technischer Parameter sowie technischer Lösungen. Die Bearbeitungszeit Energieberatungskonzepte bei Wohngebäuden wird so um 65% und bei Nichtwohngebäuden sogar um 75% reduziert. Der Lösungsansatz ermöglicht neben der Effizienzsteigerung auch eine Verstetigung der Beratungsqualität, die dann weniger vom individuellen Erfahrungs- und Kenntnishorizont des Beratenden abhängt.

Das erfindungsgemäße Verfahren erstellt einen Vektorraum mittels Einheitsvektoren aus eingangsseitig bereitgestellten Werten, aus welchem die Extrema - lokale Minima und lokale Maxima - direkt abgelesen werden, wobei nachfolgend, im Anschluss in der jeweiligen Vektordimension, ein maschinelles Lernen erfolgt. Erfindungsgemäß wird eine n-dimensionale Berechnungslogik zur Lösung des multidimensionalen Matrix-Problems aufgebaut.

Der Focus der vorliegenden Erfindung liegt auf einer Gebäudesimulation, unter Verwendung von Gebäudeparametern zur Berechnung der Dämmung, in Kombination mit Angaben zu Parametern wie Photovoltaik-Leistung, Photovoltaik-Nutzung, Batteriekapazität, Batterietyp, Wärmeerzeuger, Wärmeübergabe, Warmwassererzeugung, Wärmespeicher, Lüftungskonzept, Förderkonzept und anderen mehr.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:

Fig. 1: eine erfindungsgemäße Vorrichtung für den schematischen KI-Algorithmus mit relevanten Daten beziehungsweise Datensätzen,

Fig. 2: eine erfindungsgemäße Vorrichtung mit wesentlichen Bestandteilen und

Fig. 3: einen skizzierter Matrixaufbau relevanter Observablen.

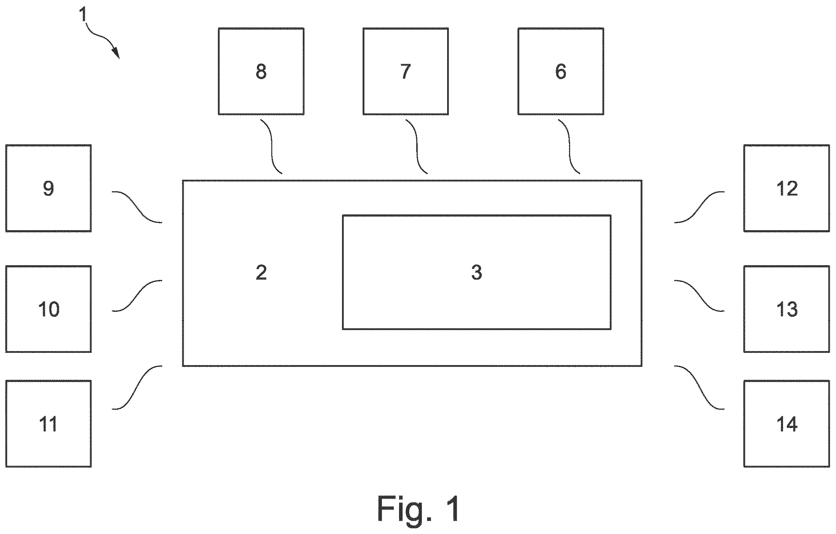

In **Figur 1** ist eine erfindungsgemäße Vorrichtung 1 zur Ermittlung gebäudespezifischer Energiekonzepte beheizte Gebäude schematisch mit relevanten Daten beziehungsweise Datensätzen dargestellt. Die Vorrichtung 1 umfasst ein Prozessormodul 2 mit einem KI-Modul 3 als zentrales Element des Verfahrens beziehungsweise zur KI-unterstützte Ermittlung ganzheitlicher optimierter Lösungen nach physikalischer Logik, also der Bereitstellung mindestens eines Energiekonzepts.

Die Figur 1 zeigt weiterhin wesentliche eingangsseitige Daten beziehungsweise Datensätze, welche dem Prozessormodul 2 mit einem KI-Modul 3 bereitgestellt werden. Derartige eingangsseitige Daten beziehungsweise Datensätze werden beispielsweise mittels einer nicht dargestellten Eingabeeinheit 4 oder angeschlossenen Datenbanken, wie einer intelligenten Datenbank 5 bereitgestellt.

Zu den eingangsseitigen Daten beziehungsweise Datensätzen zählen Technologiebausteine 6, Kundenwünsche 7, Gebäudeparameter 8, Standortparameter 9, Informationen zu erneuerbare Energien 10, relevante Gesetze 11, Förderprogramme 12, Informationen zu Installateuren 13 und ein Scan 14 des Gebäudes. Zumindest ein Teil dieser Daten beziehungsweise Datensätze fließt in die Berechnung beziehungsweise Ermittlung des Energiekonzepts ein.

Als Technologiebausteine 6 sind exemplarisch Stromerzeuger, wie Photovoltaik oder Windkraft, Wärmeerzeuger, wie Geothermie, Wärmepumpe, Ofen, Brenner, Isolierung, wie Dämmstoffe, Dämmverbundsysteme, elektrische Speichertechnologie und Temperaturmanagement, oder Ähnliches zu nennen.

Bei den Kundenwünschen 7 sind Parameter, wie die maximale Förderung, die maximale Autarkie und gegebenenfalls der Ausschluss verschiedener Technologiebausteine in Anwendung zu bringen.

Als Gebäudeparameter 8 fließen beispielsweise die Dimensionen des Gebäudes, der Energieverbrauch des aktuellen Gebäudes sowie die Beschaffenheit der thermischen Hülle des Gebäudes beziehungsweise Baukörpers ein.

Standortparameter 9 kennzeichnen das Grundstück des Gebäudes inklusive das angrenzende Gelände, gegebenenfalls eine maßgebliche Verschattung im Hinblick auf Photovoltaik und Windenergie.

Das Potenzial für erneuerbare Energien 10 wird bestimmt durch die lokale Statistik für Sonne, Wind und Geothermie.

Die relevanten Gesetze 11 beeinflussen beispielsweise als EU-Gebäuderichtline, Gebäude-Energie-Gesetz (GEG), Landesbauordnung, sowie weitere regionale Vorschriften und Bestimmungen.

Auch die Förderprogramme 12 als EU-, Bundes- und Landesförderungen haben Einfluss auf die Durchführbarkeit und Wirtschaftlichkeit der Vorhaben.

Die Wahl der Installateure 13 für Photovoltaik, Windenergie, Dämmung und Ähnliches fließen in Abhängigkeit des Gebäudestandortes mit dem Ziel der optimalen Verbindung aus kürzester Anfahrt und bester Bewertung mit ein.

Schließlich ist der Scan 14 des Gebäudes mit Drohne oder die Einbindung von GIS-Daten zur Unterstützung von Gebäudeparametern 8 und Standortparametern 9 von Einfluss auf die Optimierung.

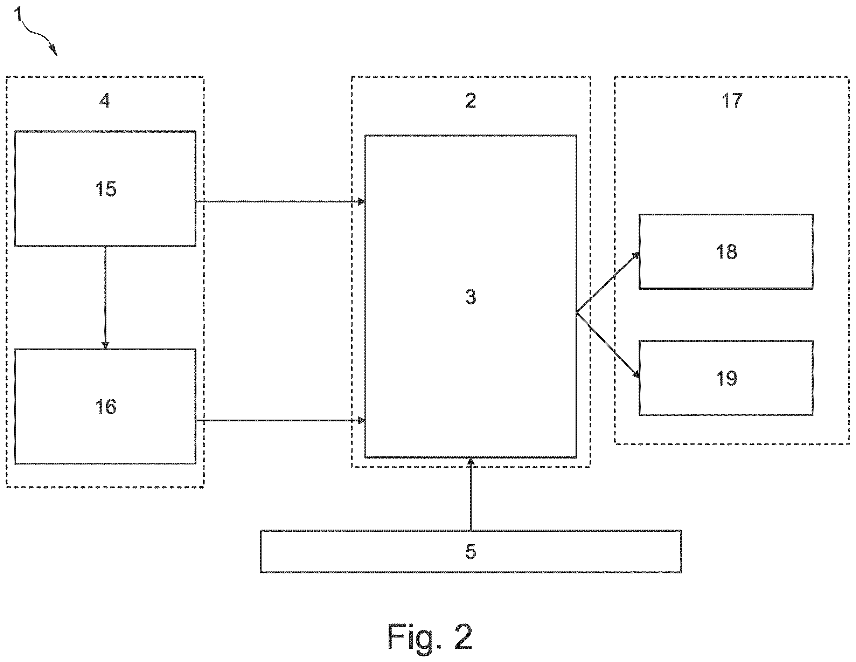

In **Figur 2** ist eine erfindungsgemäße Vorrichtung 1 mit wesentlichen Bestandteilen zur Durchführung des Verfahrens zur KI-gestützten Ermittlung standortindividueller, holistischer Energiekonzepte für beheizte Gebäude schematisch dargestellt.

In einer Eingabeeinheit 4 ist ein Inputmodul 15 angeordnet, über welches Daten beziehungsweise Datensätze einer Vor-Ort-Datenaufnahme erzeugt und dem vorliegenden Verfahren bereitgestellt werden. Weiterhin ist in der Eingabeeinheit 4 ein Programmmodul 16 angeordnet, über welches Daten beziehungsweise Datensätze zu gebäudespezifischen Randbedingungen einfließen, wobei das Programmmodul 16 kommerzielle Software wie beispielsweise HottCAD oder PV*SOL nutzt. Somit kann beispielsweise die Wärmekapazität des Gebäudes beziehungsweise Baukörpers, die Transmissionswärmeverluste im Ist-Zustand und von Varianten sowie Photovoltaik-Erträge im Ist-Zustand und von Varianten ermittelt und an das interne KI-Modul 3 im Prozessormodul 2 weitergegeben werden.

Eine kommerzielle Software wie HottCAD dient zur schnellen und effizienten Erfassung von Gebäudedaten, insbesondere für die Gebäudedatenmodellierung im Rahmen der BIM-Methodik. Die Software ermöglicht beispielsweise eine digitale Erfassung von Geometriedaten, Baustoffen und Schichtaufbauten in einem 3D-Modell. Daten dieses erzeugten 3D-Modells werden als Daten für Berechnungen im Prozessormodul 2 mit seinem KI-Modul 3 verwendet.

Unter der Bezeichnung PV*SOL ist eine Software zur detaillierten Planung und Simulation von Photovoltaik-Anlagen (PV-Anlagen) bekannt. Diese Software ermöglicht beispielsweise eine Berechnung von Erträgen und eine Prüfung einer Wirtschaftlichkeit einer Photovoltaik-Anlage.

Aus dem Inputmodul 15 werden Daten beziehungsweise Datensätze direkt an das KI-Modul 3 übertragen, welche Parameter der Anlagentechnik im Ist-Zustand, Verbräuche und Lastgänge, Kundenwünsche und standortspezifische Randbedingungen sein können.

Im KI-Modul 3 erfolgt nach der Festlegung der Grenzwerte die KI-unterstützte, ganzheitliche Optimierung nach physikalischer Logik, wobei eine Energiebilanzierung des Gebäudes inklusive der Prozessenergie erfolgt. Es schließt sich eine Ergebnisaufbereitung an. Daten zu mindestens einem derart vom KI-Modul ermittelten Energiekonzept werden an eine Ausgabeeinheit 17 übermittelt.

Die Ausgabeeinheit 17 weist ein erstes Ausgabemodul 18 und ein zweites Ausgabemodul 19 auf. Das erste Ausgabemodul 18 ist zur Ausgabe der Ergebnisse, also des ermittelten Energiekonzepts, nach physikalischer Logik eingerichtet. Das zweite Ausgabemodul 19 ist zur Ausgabe der Ergebnisse, also des ermittelten Energiekonzepts, nach nationaler Gesetzgebung eingerichtet.

Zur verfahrensgemäßen Ermittlung mindestens eines Energiekonzepts ist vorgesehen, dass aus mindestens einer mit dem KI-Modul 3 der Prozessormoduls 2 verbundenen intelligenten Datenbank 5 beispielsweise Parameter technischer Lösungsbausteine, gesetzliche Rahmenbedingungen und Förderbausteine sowie die Kosten für die Lösungsbausteine zum KI-Modul 3 übertragen und verfahrensgemäß im KI-Modul 3 verarbeitet werden.

Die **Figur 3** zeigt einen skizzierten Matrixaufbau relevanter Observablen.

Hierbei wurden beispielhaft Angaben beziehungsweise Daten zu den Gebieten Stromerzeugung, Wärmeerzeugung, Stromspeicherung und Wärmespeicherung beispielhaft dargestellt. Zu den jeweiligen Gebieten erfolgt eine Unterteilung der Daten in Eingangsgrößen (Input1 und Input 2) sowie Ausgangsgrößen (Output). Derartige Eingangsgrößen werden bei der erfindungsgemäßen Ermittlung gebäudespezifischer Energiekonzepte für beheizte Gebäude verarbeitet. Im Ergebnis dieser verfahrensgemäßen Verarbeitung werden unter anderem die in der Figur 3 gezeugten Ausgangsgrößen ermittelt und im Energiekonzept ausgegeben.

**Bezugszeichenliste**

1     Vorrichtung zur Ermittlung gebäudespezifischer Energiekonzepte beheizte Gebäude

2     Prozessormodul

3     KI-Modul

4     Eingabeeinheit

5     intelligente Datenbank

6     Technologiebausteine

7     Kundenwünsche

8     Gebäudeparameter

9     Standortparameter

10     Informationen zu erneuerbaren Energien

11     Relevante Gesetze

12     Förderprogramme

13     Informationen zu Installateuren

14     Scan des Gebäudes

15     Inputmodul

16     Programmmodul

17     Ausgabeeinheit

18     erstes Ausgabemodul

19     zweites Ausgabemodul

**Patentansprüche**

1.     Verfahren zur Ermittlung gebäudespezifischer Energiekonzepte für beheizte Gebäude, wobei eine Ermittlung standortindividueller, holistischer Energiekonzepte für beheizte Gebäude erfolgt, bei welchem:

    - in einem ersten Schritt einem Prozessormodul (2) über eine Eingabeeinheit (4) Datensätze bereitgestellt und vorverarbeitet werden, wobei die Datensätze mindestens gebäudespezifische Daten sind und mindestens physikalische Parameter des Gebäudes ermittelt werden,
    - Verarbeitungsresultate aus dem ersten Schritt und weitere Parameter einem KI-Modul (3) im Prozessormodul (2), zur Verarbeitung durch das KI-Modul (3), bereitgestellt werden, wobei eine KI-unterstützte Ermittlung ganzheitlicher optimierter Lösungen nach physikalischer Logik im KI-Modul (3) mit einer Energiebilanzierung des Gebäudes inklusive der Prozessenergie erfolgt und mindestens ein Energiekonzepte durch das KI-Modul (3) bereitgestellt wird,
    - Ergebnisse der KI-unterstützte Ermittlung über eine Ausgabeeinheit (17) ausgegeben werden, wobei die Ausgabe eines Energiekonzepts nach physikalischer Logik und/oder nach nationaler Gesetzgebung erfolgt,
- die KI-unterstützte Ermittlung ganzheitlicher optimierter Lösungen im KI-Modul (3) auf Zustandsbeschreibungen mittels Einheitsvektoren und Observablen aus selbstadjungierten Operatoren als isomorph-äquivalent vereint im Hilbertraum erfolgt.

2. Verfahren nach Anspruch 1, **dadurch gekennzeichnet, dass** weitere Parameter mindestens Parameter technischer Lösungsbausteine (6), gesetzlicher Rahmenbedingungen (11) sowie Förderbausteinen (12) und Kosten für Lösungsbausteine umfassen.

3. Verfahren nach Anspruch 1 oder 2, **dadurch gekennzeichnet, dass** eine Lösung des multidimensionalen Matrix-Problems im Hilbertraum als optimale Lösung L aus dem Skalarprodukt aller relevanten Observablen A im Zustand $\psi$ mit Messwert $\alpha$ gemäß $L=|<\alpha|\psi>|^2$ berechnet wird.

4. Verfahren nach einem der Ansprüche 1 bis 3, **dadurch gekennzeichnet, dass** in der Ausgabeeinheit (17) ein erstes Ausgabemodul (18) zur Ausgabe des Energiekonzepts nach physikalischer Logik und ein zweites Ausgabemodul (19) zur Ausgabe des Energiekonzepts nach nationaler Gesetzgebung bereitgestellt werden.

5. Verfahren nach einem der Ansprüche 1 bis 4, **dadurch gekennzeichnet, dass** gebäudespezifische Daten aus Daten vom Ist-Zustand der Anlagentechnik, Verbräuche und Lastgänge, Kundenwünsche (7), standortspezifische Randbedingungen ausgewählt sind und an das KI-Modul (3) übermittelt werden.

6. Verfahren nach einem der Ansprüche 1 bis 5, **dadurch gekennzeichnet, dass** gebäudespezifische Daten als gebäudespezifische Randbedingungen an das KI-Modul (3) übermittelt werden.

7. Verfahren nach einem der Ansprüche 1 bis 6, **dadurch gekennzeichnet, dass** als physikalische Parameter eine Wärmekapazität des Gebäudes, Transmissionswärmeverluste mit Ist-Stand und Varianten und/oder Photovoltaik Erträge mit Ist-Stand und Varianten an das KI-Modul (3) übermittelt werden.

8. Verfahren nach einem der Ansprüche 1 bis 7, **dadurch gekennzeichnet, dass** 10.000 bis 50.000 simulierte Optionen pro Gebäude mit dem KI-Modul (3) berechnet werden.

9. Vorrichtung (1) zur Ermittlung gebäudespezifischer Energiekonzepte beheizte Gebäude, insbesondere eingerichtet zur Durchführung des Verfahrens nach einem der vorhergehenden Ansprüche 1 bis 8, wobei die Vorrichtung (1) mindestens ein Prozessormodul (2), eine Eingabeeinheit (4) und eine Ausgabeeinheit (17) aufweist, wobei die Eingabeeinheit (4) ein Inputmodul (15) und ein Programmmodul (16) umfasst, wobei das Prozessormodul (2) mit einer intelligenten Datenbank (5) verbunden angeordnet ist und wobei die Ausgabeeinheit (17) ein erstes Ausgabemodul (18) zur Ausgabe eines Energiekonzepts nach physikalischer Logik und ein zweites Ausgabemodul (19) zur Ausgabe eines Energiekonzepts nach nationaler Gesetzgebung aufweist.

10. Computergerät, das einen Prozessor und einen Speicher umfasst, wobei mindestens ein Programm in dem Speicher gespeichert ist und wobei das mindestens eine Programm von dem Prozessor geladen und ausgeführt wird, um das Verfahren zur Ermittlung gebäudespezifischer Energiekonzepte für beheizte Gebäude gemäß einem der Ansprüche 1 bis 8 zu implementieren.

11. Computerlesbares Speichermedium mit mindestens einem darin gespeicherten Programmcode, wobei der mindestens eine Programmcode von einem Prozessor geladen und ausgeführt wird, um das Verfahren zur Ermittlung gebäudespezifischer Energiekonzepte für beheizte Gebäude gemäß einem der Ansprüche 1 bis 8 zu implementieren.

12. Computerprogrammprodukt, das ein Computerprogramm umfasst, das, wenn es von einem Prozessor ausgeführt wird, ein Verfahren zur Ermittlung gebäudespezifischer Energiekonzepte für beheizte Gebäude gemäß einem der Ansprüche 1 bis 8 implementiert.

Fig. 1

Fig. 2

**Baustein – Wärmeerzeugung**

| | Input 1 | Input 2 | Output |
|---|---|---|---|
| Wärmepumpe | Techn. Produktdaten | - Kosten - Strombedarf | Wärmeleistung |
| Geothermie | Techn. Produktdaten | - Kosten Techn. - Kosten Gutachten | |
| BHKW | Techn. Produktdaten | - Kosten Techn. - Kosten Brennmittel | - Strom & Wärmemix - Kosten |
| Ofen (Holz, Öl, Gas...) | | | |

**Baustein – Wärmespeicherung**

| | Input 1 | Input 2 | Output |
|---|---|---|---|
| Wald / Holz | Techn. Daten (Lagerung, etc.) | Holzart, etc. | Kosten: Wärmemenge / Lagerfläche |
| Wasserstoff | - Techn. Elektrolyse - Brennstoffzelle Oder BHKW | - Kosten Elek. - Kosten BZ - Kosten Speicher | |
| CH4 (P2G) | Techn. Daten der Systeme | - Kosten des Systems | |

**Baustein – Stromerzeugung**

| | Input 1 | Input 2 | Output |
|---|---|---|---|
| PV | Techn. Produktdaten (Leistung, Größe, etc.) | Kosten | - Strom / Fläche pro Tag - Kosten |
| Wind | Techn. Produktdaten | - Kosten Techn. - Kosten Gutachten | - Strom / pro Tag - Kosten |
| BHKW | Techn. Produktdaten | - Kosten Techn. - Kosten Brennmittel | - Strom & Wärmemix - Kosten |

**Baustein – Stromspeicherung**

| | Input 1 | Input 2 | Output |
|---|---|---|---|
| Batterie | Techn. Produktdaten (Leistung, Größe, etc.) | Kosten | - Stromkapa. / Fläche pro Tag - Kosten |
| Wasserstoff | - Techn. Elektrolyse - Brennstoffzelle Oder BHKW | - Kosten Elek. - Kosten BZ - Kosten Speicher | |
| CH4 (P2G) | Techn. Daten der Systeme | - Kosten des Systems | |

Fig. 3

Europäisches Patentamt
European Patent Office
Office européen des brevets

## EUROPÄISCHER RECHERCHENBERICHT

Nummer der Anmeldung

**EP 25 20 5192**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 584 614 A (ARBNCO LTD [GB]) 16. Dezember 2020 (2020-12-16) * Anspruch 11 * * Seiten 4-5 * * Seite 24 * * Seite 6 * * Seite 11 * * Seite 12 * * Seite 20 * * Seite 28 * * das ganze Dokument * ----- | 1-12 | INV. G06F30/13 G06F30/27 G06Q50/08 |
| A | US 2024/265167 A1 (GHOBAD LADAN [US] ET AL) 8. August 2024 (2024-08-08) * Absatz [0002] * * das ganze Dokument * ----- | 4 | |

RECHERCHIERTE SACHGEBIETE (IPC)

G06F
G06Q

Der vorliegende Recherchenbericht wurde für alle Patentansprüche erstellt

| Recherchenort | Abschlußdatum der Recherche | Prüfer |
|---|---|---|
| München | 9. Februar 2026 | Dapp, Wolfgang |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 5192

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2026

| Im Recherchenbericht angeführtes Patentdokument | Datum der Veröffentlichung | Mitglied(er) der Patentfamilie | Datum der Veröffentlichung |
|---|---|---|---|
| GB 2584614 A | 16-12-2020 | KEINE | |
| US 2024265167 A1 | 08-08-2024 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4085387 A1
- WO 2021133253 A1
- CN 114943565 A
- EP 4102444 A1
- US 20190311286 A1